# EUROPEAN PATENT APPLICATION

(11) **EP 4 653 717 A1**
(43) Date of publication of application: **26.11.2025**
(21) Application number: 23917583.9
(22) Date of filing: 07.07.2023
(51) Int. Cl.: F16D 3/68

(54) **SHAFT COUPLING AND METHOD FOR PRODUCING SAME**

(30) Priority: 17.01.2023 JP 2023005436
(71) Applicant: Miki Pulley Co., Ltd, Nakahara-ku Kawasaki-shi Kanagawa 211-8577 (JP)
(72) Inventor: HIROSAWA, Masaharu, Kawasaki-shi, Kanagawa 211-8577 (JP); NISHIMURA, Kohei, Kawasaki-shi, Kanagawa 211-8577 (JP); NAKAJIMA, Ryo, Kawasaki-shi, Kanagawa 211-8577 (JP)
(74) Representative: Schumacher & Willsau
(86) International application number: PCT/JP2023/025308
(87) International publication number: WO 2024/154370

(57) **Abstract**

[Problem] To provide a shaft coupling which facilitates the production of a shaft coupling having a pair of hubs and an elastic member provided therebetween.

[Solution] A shaft coupling 1 comprises a pair of metal hubs 3A, 3B having shaft holes into which a shaft can be fitted, and an element 4 arranged between the pair of hubs 3A, 3B at a predetermined distance from each hub 3A, 3B, wherein the element 4 comprises: metal insert members 21A-21D, each of which has two end surfaces 27, 28 facing the corresponding hubs 3A, 3B, and fixed to the hubs by fasteners 41, and a circumferential surface 29; and an elastic member 22 provided to form a single component with the insert members 21A-21D such that the elastic member 22 at least partially covers the circumferential surface 29 of each insert member, and wherein the insert members 21A-21D include first insert members 21A, 21C fixed only to one of the hubs, and second insert members 21B, 21D fixed only to the other.

## Description

### TECHNICAL FIELD

The present invention relates to a shaft coupling that connects two shafts and a method for producing the same.

### BACKGROUND ART

Known shaft couplings for connecting two shafts include a shaft coupling configured to connect a drive shaft of a control motor to a driven shaft which are on a load side, and comprise a pair of hubs attached to the drive shaft and driven shaft, and an elastic member made of a urethane resin composition and interposed between the hubs (Patent Document 1). The shaft coupling is configured such that an elastic member made of the urethane resin composition is provided between the pair of hubs made of aluminum or stainless steel, which provides more stable vibration damping characteristics of the shaft coupling compared to configurations in which a metal bellow or ring plate spring is provided between the hubs.

Known methods for producing a shaft coupling having such a configuration includes a method for producing a shaft coupling having an elastic member, the method including the steps of: manufacturing a pair of hub intermediates; inserting both of the intermediates into an insert chamber of a metal mold; injecting elastic material into a space defined between opposing inner end surfaces of the respective intermediates while a positioning protrusion formed on an outer end of one of the intermediates being engaged with a positioning holes formed in the other of the intermediates, to thereby form an elastic member; after the shaft coupling is demolded, removing the positioning protrusion or positioning hole of the intermediates after the shaft joint is demolded; and forming a connecting hole in a center of each of the intermediates (Patent Document 2).

### PRIOR ART DOCUMENT (S)

### PATENT DOCUMENT(S)

Patent Document 1: JP2002-327774A
Patent Document 2: JP2008-241029A

### SUMMARY OF THE INVENTION

### TASK TO BE ACCOMPLISHED BY THE INVENTION

The method of the prior art disclosed in Patent Document 2 further includes the steps of removing the positioning protrusions or positioning hole of the intermediates with the pair of hubs to form a single component with an elastic member after the shaft couple beings demolded; and forming a connecting hole in the center of each of the intermediates.

In other words, the above-described method of the prior art involves a process for forming a configuration in which an elastic member is provided between a pair of hubs, and the process requires high-precision machining (e.g., machining to form the shaft hole) while the pair of hubs form a single component with the elastic member (i.e., when the shaft coupling is assembled). As a result, a process of producing a shaft coupling becomes complicated.

The present invention has been made in view of the above-described problem of the prior art, and a primary object of the present invention is to provide a shaft coupling and a method for producing the same which facilitate the production of a shaft coupling having a pair of hubs and an elastic member provided therebetween.

### MEANS TO ACCOMPLISH THE TASK

As a solution to the above-described tasks to be accomplished, an aspect of the present invention provides a shaft coupling comprising: a pair of hubs (3A, 3B) made of metal, each having a shaft hole (10A, 10B) into which a shaft (2A, 2B) can be fitted; and an element (4) arranged between the pair of hubs at a predetermined distance from each of the hubs, wherein the element comprises: a plurality of metal insert members (21A-21D), each of which has a pair of end surfaces (27, 28) facing the corresponding hubs and fixed to the hubs by fasteners (41), and a circumferential surface (29) that connects to peripheral edges of the pair of end surfaces; and an elastic member (22) that is made of an elastomer material and provided to form a single component with the plurality of metal insert members such that the elastic member covers at least a part of the circumferential surface of each of the insert members, and wherein the plurality of insert members include one or more first insert members (21A, 21C) fixed only to one of the pair of hubs, and one or more second insert members (21B, 21D) fixed only to the other.

In this configuration, there is no need for high-precision machining (e.g., machining to form the shaft hole) while the shaft coupling is assembled, which facilitates the production of a shaft coupling having a pair of hubs and an elastic member provided therebetween. In addition, this configuration advantageously increases the degree of freedom of combinations of the hubs and element.

The above shaft coupling may be further configured such that the element forms a circular ring, and wherein the plurality of insert members are arranged at equal intervals in a circumferential direction of the element.

This configuration allows the element to be rotated in a smooth manner during the rotation of the two shafts.

The above shaft coupling may be further configured such that each of the insert members is provided to have a fan shape as viewed in an axial direction.

This configuration allows forces acting on each of the insert members to be properly (i.e. evenly) transmitted to the elastic member during the rotation of the two shafts.

The above shaft coupling may be further configured such that the elastic member is provided to cover an entirety of the circumferential surface of each of the insert members.

This configuration enhances the unity of the insert members and the elastic members, allowing the element to rotate in a stable manner during the rotation of the two shafts.

The above shaft coupling may be further configured such that the pair of hubs and the element have a same outer diameter as viewed in an axial direction.

The above shaft coupling may be further configured such that each of the hubs has a split groove (14) radially extending from the outer surface, and wherein the split groove forms a gap having a changeable width that allows the shaft to be releasably fixed.

In this configuration, the gap of the split groove can be changed (to be wider and closer) so that the shaft can be releasably fixed.

As another solution to the above-described tasks to be accomplished, an aspect of the present invention provides a method for producing the shaft coupling as claimed in claim 1, comprising: a molding step of insert molding the element such that the elastic member can form a single component with the plurality of insert members, and an assembly step of fixing the insert molded element to the pair of hubs by the fasteners.

In this configuration, there is no need for high-precision machining (e.g., machining to form the shaft hole) while the shaft coupling is assembled, which facilitates the production of a shaft coupling having a pair of hubs and an elastic member provided therebetween. In addition, this configuration advantageously allows for the formation of the element independently of the hubs, resulting in the reduction of the time required to produce a shaft coupling.

The above method may be further configured such that each of the insert members axially tapers from one of the pair of end surfaces toward the other.

In this configuration, after the insert molding for the formation of the elastic member around the insert members, the insert members can be easily removed from the mold.

### EFFECT OF THE INVENTION

The above-described configurations of the present invention provide a shaft coupling and a method for producing the same which facilitate the production of a shaft coupling having a pair of hubs and an elastic member provided therebetween.

### BRIEF DESCRIPTION OF THE DRAWINGS

[Figure 1] Figure 1 is a perspective view of a shaft coupling according to an embodiment of the present invention;
[Figure 2] Figure 2 is an exploded perspective view of the shaft coupling of the embodiment;
[Figure 3] Figure 3 is a perspective view of an element of the embodiment; and
[Figure 4] Figure 4 is a longitudinal cross-sectional view of the shaft coupling of the embodiment.

### DESCRIPTION OF THE PREFERRED EMBODIMENT(S)

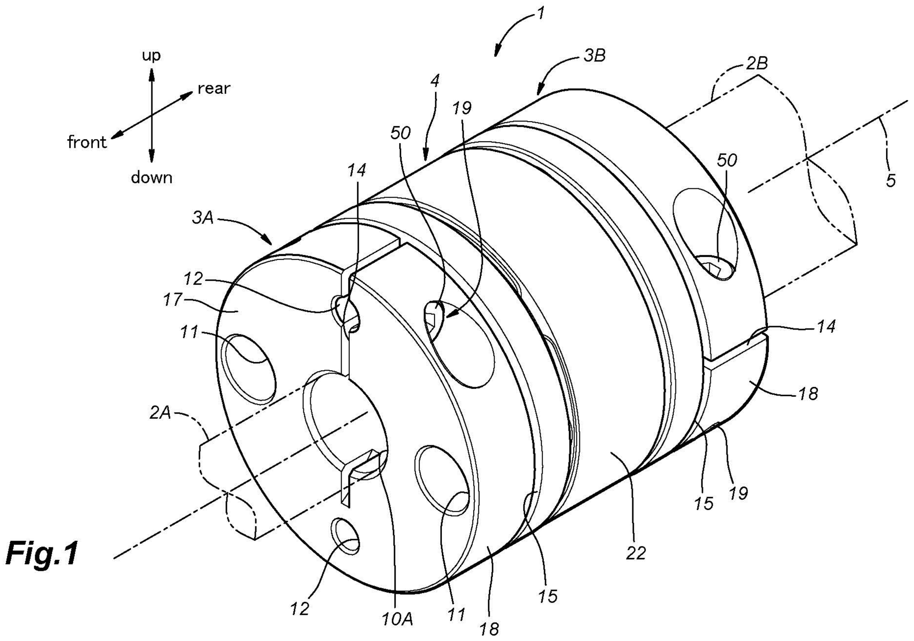

Embodiments of a shaft coupling and a method for producing the same according to the present invention will be described below with reference to the drawings. Terms indicating directions are used herein as a convenient way for the description, and refer to the up/down (vertical) and front/rear directions illustrated by using arrows in the drawings (such as arrows in Figure 1).

As shown in Figure 1, a shaft coupling 1 is for connecting two rotatable shafts 2A and 2B, and comprises a pair of clamp hubs 3A and 3B made of metal, and an element 4 arranged between the clamp hubs 3A and 3B.

The shafts 2A and 2B extend in a front-rear direction, and are arranged such that axes 5 of the shafts 2A and 2B are positioned at the respective center lines of rotation. The shaft 2B has an outer diameter which is greater than that of the shaft 2A. However, in some cases, the shafts 2A and 2B may have the same outer diameter. Each of the shafts 2A and 2B may be used, for example, as a drive shaft of a motor and a shaft of a device that is driven by the motor (i.e., driven shaft on a load side, not shown). However, the form of the shaft, which is to be connected to the shaft coupling 1, is not limited to this example.

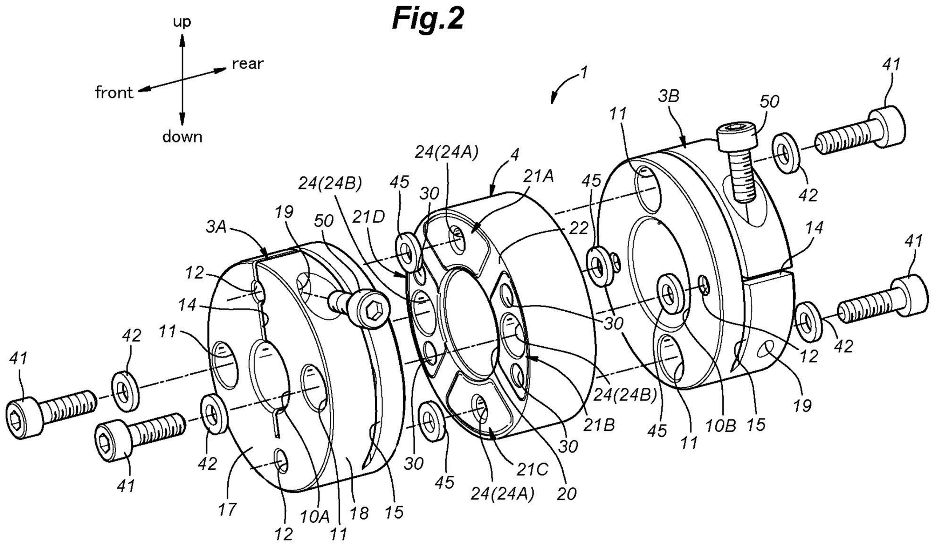

As shown in Figure 2, the clamp hubs 3A and 3B is substantially circular in shape, and have shaft holes 10A and 10B at the respective center points thereof. The shafts 2A and 2B are inserted and fixedly fitted into the shaft holes 10A and 10B, respectively. The shaft hole 10B has a diameter which is greater than that of the shaft hole 10A so that the diameters of the shaft holes 10A and 10B correspond to the outer diameters of the shafts 2A and 2B, respectively. The clamp hub 3B is different from the clamp hub 3A in the sizes of shaft holes 10B, but the rest of the former has the same configuration as that of the clamp hub 3A. In some cases, the clamp hub 3B is arranged to be directed to an opposite side to the clamp hub 3A in the front-rear direction.

In the following description, parts of the clamp hubs 3A and 3B having identical (or substantially identical) shapes and/or functions are denoted by same reference numerals. The same applies to common attachments (such as bolts) to the clamp hubs 3A and 3B.

The clamp hub 3A has two through holes 11 extending in the front-rear direction (axial direction). The two through holes 11 are positioned to be rotational symmetry with each other (i.e., positioned such that, when the clamp hub 3A is rotated 180 degrees around the axis 5, one of the two through holes would overlap the other at the current position). The clamp hub 3A also has two screw holes 12 extending in the front-rear direction. The two screw holes 12 are positioned to be substantially rotationally symmetric with the two through holes 11 (i.e., positioned such that, when the clamp hub 3A is rotated 90 degrees around the axis 5, the two screw holes 12 would overlap the two through holes 11 at the current positions.

In addition, the clamp hub 3A has a split groove 14 that extends radially as viewed from the front, and a slit 15 that extends circumferentially along the outer surface (or, in a direction perpendicular to the axis 5).

The split groove 14 opens on a front surface 17 and an outer circumferential surface 18 of the clamp hub 3A. The split groove 14 is formed as a cutout of the clamp hub 3A that extends radially from a position at the top of the outer circumferential surface 18 to the shaft hole 10A, and further extends beyond the shaft hole to a point partway in the radial direction on the opposite side (i.e., so as not to split the clamp hub 3A into two). The rear end of the split groove 14 is connected to the slit 15.

The slit 15 opens on the outer circumferential surface 18 of the clamp hub 3A. The slit 15 is formed as a cutout of the clamp hub 3A extending along a plane perpendicular to the front-rear direction at a middle of the front and rear ends of the clamp hub 3A, such that the slit 15 extends downward from a position at the top of the outer circumferential surface 18 to the shaft hole 10A, and further extends beyond the shaft hole to a point partway in the radial direction on the opposite side.

In addition, the clamp hub 3A has a fastening screw hole 19 that extends through the upper part of the split groove 14, in a direction perpendicular thereto.

The clamp hub 3A is made of metal such as aluminum or stainless steel. The clamp hub 3B has the same configuration as that of the clamp hub 3A.

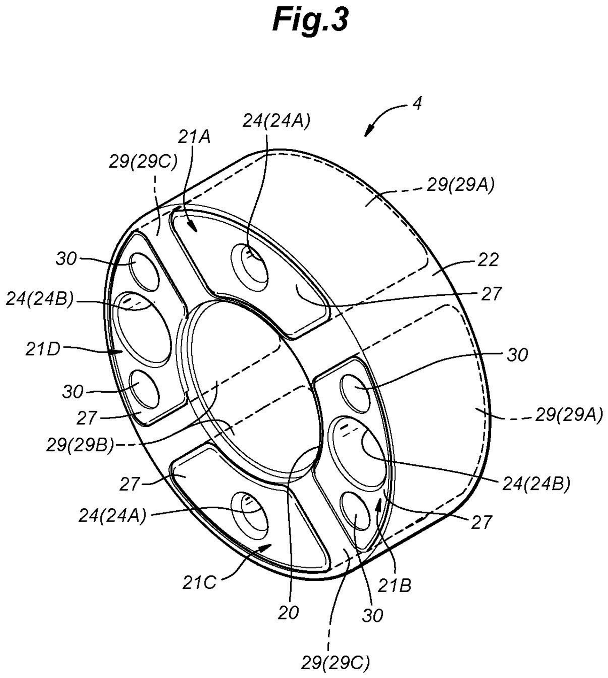

As shown in Figure 3, the element 4 is substantially circular ring in shape, and has a through hole 20 extending in the front-rear direction at the center point thereof. The through hole 20 has the same axis as those of the shaft holes 10A and 10B of the clamp hubs 3A and 3B (i.e., the axis of the element 4 is in alignment with the axes 5 of the clamp hubs 3A and 3B). The element 4 can also function as a spacer for the clamp hubs 3A and 3B. In addition, the through hole 20 has a diameter that is substantially the same as the shaft hole 10B of the clamp hub 3B. Preferably, the element 4 has the same outer diameter as the clamp hubs 3A and 3B as viewed in an axial direction.

The element 4 includes a plurality of (four, in this case) metal insert members 21A-21D, and an elastic member 22 that is made of an elastomer material and arranged between the insert members 21A-21D. The insert members 21A-21D are arranged at equal intervals (here, every 90 degrees) in the circumferential direction of the element 4 in an axial view. The insert members 21A-21D may be formed of a metal material, as with the clamp hubs 3A and 3B.

In the following description, parts of the insert members 22A-21 having identical or substantially identical shapes and/or functions are denoted by same reference numerals.

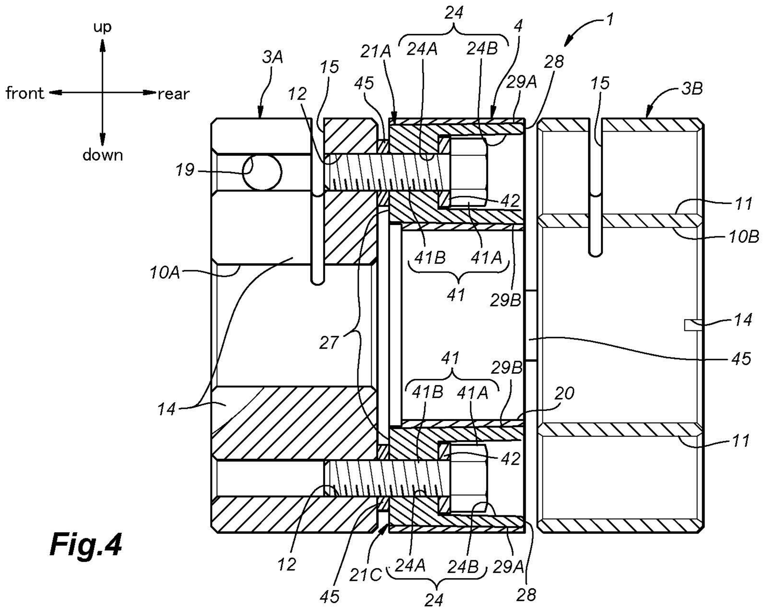

Each of the insert members 21A, 21C (first insert members, in the present embodiment) extends in an arc shape along the circumference of element 4 to have a substantially fan shape as viewed in its axial direction. (In other words, it is an annular fan shape, i.e., a shape formed by two arcs arranged in a row at a predetermined distance from each other and straight lines, each of which connects the corresponding ends of the arcs.) As shown in Figure 4, each of the plurality of insert members 21A, 21C (in this case) has a corresponding bolt hole 24 extending therethrough in the front-rear direction in its circumferentially central part. Each of the bolt holes 24 has its axis aligned with the through holes **11** of one of the clamp hubs 3A, 3B and the screw hole 12 of the other. (In Figure 4, the through hole **11** of the clamp hub 3B and the screw hole 12 of the clamp hub 3A.)

Each of the bolt holes 24 has a small diameter portion 24A that opens on a front surface 27 of a corresponding one of the insert members 21A, 21C, and a large diameter portion 24B that connects to the rear of the small diameter portion 24A and opens on a rear surface 28 of the corresponding one of the insert members 21A, 21C. Each of the insert members 21A, 21C tapers from the rear to the front (i.e., the outer diameter gradually decreases from the rear surface 28 to the front surface 27). As a result, the elastic member 22, which covers an outer circumferential surface 29A and an inner circumferential surface 29B of each of the insert members 21A, 21C, has a thickness that gradually increases from the rear to the front, as shown in a cross-sectional view in Figure 4.

The insert members 21B, 21D (second insert members, in the present embodiment) have the same configuration as the insert members 21A and 21C. However, each of the insert members 21B and 21D is arranged to have front and rear surfaces that face opposite directions to the insert members 21A and 21C. In other words, each of the insert members 21B and 21D has its bolt hole 24 having its large diameter portion 24B that opens on the front surface 27 and its small diameter portion 24A that opens on the rear surface 28, respectively. Each of the insert members 21B and 21D tapers from the front to the rear (i.e., the outer diameter gradually decreases from the front surface 27 to the rear surface 28) in a similar manner to the insert member 21A or 21C.

Each of the insert members 21B, 21D has a pair of recesses 30 on the front surface 27, each having a substantially circular shape as viewed in the axial direction, and the pair of recesses 30 are positioned with the large diameter portion 24B therebetween in the circumferential direction (the same applies to the rear surfaces 28 of each of the insert members 21A, 21C).

Each of the insert members 21A-21D has circumferential surfaces 29 that continuously extend to the peripheral edges of end surfaces (the front surface 27 and the rear surface 28 in this case). The circumferential surface 29 includes a pair of flat surfaces 29C that radially extend and connect to the outer and inner circumferential surface 29A and 29B, i.e., their circumferential edges thereof (Figure 3). However, connection parts, which connect from the flat surface 29C to the outer circumferential surface 29A and to the inner circumferential surface 29B, each form a curved surface (round chamfered).

The elastic member 22 is provided to cover an entirety of the circumferential surface 29 of each of the insert members 21A-21D, thereby forming a single component with the insert members 21A-21D. In other words, the elastic member 22 has a plurality of substantially fan-shaped through holes, in which the insert members 21A-21D can be axially inserted. In addition, the elastic member 22 exposes the front surface 27 and rear surface 28 of each of the insert members 21A-21D. The elastic member 22 only needs to at least partially expose the front surface 27 and rear surface 28 of each of the insert members 21A-21D (Specifically, the elastic member 22 needs to expose the openings of the small diameter portion 24A and large diameter portion 24B). In some cases, the elastic member 22 may be provided not to cover at least a part of (i.e., provided to partially expose) the inner circumferential surface 29B of the circumferential surface 29 of each of the insert members 21A-21D. For example, as well as being configured to expose the end edge (the front edge) of the inner circumferential surface portion 29B of each of the insert members 21A and 21C as shown in Figure 4, the elastic member 22 may be configured to expose a middle part of the inner circumferential surface portion 29B in the front-rear direction.

The elastic member 22 is made of, for example, an elastomer material that exhibits relatively high elasticity. The elastic member 22 may be formed as a member comprising a combination of two or more elastomer materials (such as a member having layers of different types of materials stacked in the axial direction). The elastomer materials that can be used in the elastic member 22 include thermosetting elastomers and thermoplastic elastomers. Such thermosetting elastomers may include thermosetting-resin-based elastomers (such as urethane rubber, silicone rubber, and fluorine rubber), as well as natural rubber and synthetic rubber. Such thermoplastic elastomers may include known elastomers such as styrene-based elastomers, olefin-based elastomers, urethane-based elastomers, ester-based elastomers, polyvinyl chloride (PVC)-based elastomers, and amide-based elastomers.

A process of assembling the shaft coupling 1 includes placing the clamp hubs 3A and 3B and the element 4 in their correct assembly positions, followed by inserting two connecting bolts 41 (which constitutes an example of a fastening device) through the through holes 11 of the clamp hub 3B and the bolt holes 24, and then fastening them to the corresponding two screw holes 12 of the clamp hub 3A, as shown in Figure 4. As a result, the element 4 is fixed to the clamp hub 3A using the connecting bolts 41. In this process, the insert members 21A and 21C are fixed only to the clamp hub 3A, which is one of the pair of clamp hubs 3A and 3B.

In this state, the large diameter portion 24B of each of the bolt holes 24 accommodates the head portion 41A of a corresponding one of the connecting bolts 41 and a corresponding washer 42. Furthermore, the threaded portion 41B of each of the connecting bolts 41 on its base end side (on the side of its head portion 41A) is threaded through the small diameter portion 24A, and screwed into the corresponding screw hole 12 of the clamp hub 3A. In addition, the threaded portion 41B of each of the connecting bolts 41 is inserted through a corresponding one of a plurality of annular distance pieces 45 provided between the element 4 and the clamp hub 3A (more specifically, between the small diameter portion 24A of each of the bolt holes 24 and the corresponding screw hole 12). The plurality of annular distance pieces 45 secure a gap between the clamp hub 3A and the element 4, which are connected to each other. In other words, this configuration allows the element 4 to be positioned at a predetermined distance from the clamp hub 3A.

The element 4 is fixed to the clamp hub 3B by the connecting bolts 41 in a similar manner to the fixing of the clamp hub 3A. In this fixing process, the insert members 21B and 21D are fixed only to the clamp hub 3B, which is one of the pair of clamp hubs 3A and 3B. In this assembled state, as each of the clamp hubs 3A and 3B of the assembled shaft couplings 1 has its split groove 14 and fastening screw hole 19, when a shaft fixing bolts 50 is inserted into the fastening screw hole 19 of each of the clamp hubs 3A and 3B and tightened, the gap of its split groove 14 is more closed (i.e., portions around the split groove 14 of each of the clamp hubs 3A and 3B elastically deform), causing the shafts 2A and 2B to be fixed in the shaft holes 10A and 10B of the clamp hubs, respectively. Then, when the shaft fixing bolts 50 are loosened, the gaps of the respective split grooves 14 of the clamp hubs 3A and 3B become wider again (the split grooves 14 are returned to their original states.), causing the shafts 2A and 2B to be released from the shaft holes 10A and 10B.

Next, a method for producing the shaft coupling 1 will be described.

A method for producing the shaft coupling 1 includes a first step of cutting and processing a metal material to form the clamp hubs 3A and 3B. At the same time, the insert members 21A-21D are produced by die casting. In other cases, the insert members 21A-21D may be produced by press working or cutting and processing. Subsequently, the method further includes insert-molding the element 4. The above-described methods for producing the clamp hubs 3A and 3B and the insert members 21A-21D are non-limiting, and various modifications may be made to the methods as necessary.

The element 4 is produced by insert molding (or cure adhesion). A process for manufacturing the element 4 includes, for example, pouring an elastomer material into a mold (not shown) with the insert members 21A-21D provided in place, and then molding the material and insert members into a single component, under predetermined pressure and temperature conditions in the mold (one example of a molding operation). In the present embodiment, each of the insert members 21A-21D tapers in a predetermined direction (i.e., from one side to the other in the axial direction) as described above. As a result, after the insert molding for the formation of the elastic member 22 around the insert members 21A-21D, the insert members 21A-21D can be easily removed from the mold.

Then, after the formation of the clamp hubs 3A and 3B and the element 4, the resulting elements are assembled using the connecting bolts 41, as described above (one example of an assembly operation).

The so-configured shaft coupling 1 and the method for producing the same allows the removal of the need of high-precision machining operations (such as the formation of shaft holes 10A, 10B and shaft hole 20) in assembling the shaft coupling 1, which facilitates the achievement of a shaft coupling configured to have a pair of hubs 3A, 3B and an element 4 provided therebetween, the element 4 including an elastic member 22, without complicating a process of the production. In addition, this configuration advantageously increases the degree of freedom of combinations of the hubs 3A, 3B and the element 4. Furthermore, this configuration allows for the formation of the element 4 independently of the hubs 3A, 3B. resulting in the reduction of the time required to produce the shaft coupling 1.

Specific embodiments of the present invention are described herein for illustrative purposes and are non-limiting. Not all parts of the shaft coupling and the method for producing the same of those embodiments are essential. Thus, at least the skilled person would be able to make modifications including addition and elimination of some parts to those embodiments as appropriate, without departing from the scope of the present invention.

### GLOSSARY

- 1: shaft coupling
- 2A, 2B: shaft
- 3A, 3B: clamp hub
- 4: element
- 5: axis
- 10A, 10B: shaft hole
- 11: through hole
- 12: screw hole
- 14: split groove
- 15: slit
- 17: front surface
- 18: outer circumferential surface
- 20: shaft hole
- 21A-21D: insert member
- 22: elastic member
- 24: bolt hole
- 24A: small diameter portion
- 24B: large diameter portion
- 27: front surface
- 28: rear surface
- 29: circumferential surface
- 29A: outer circumferential surface
- 29B: inner circumferential surface
- 29C: flat surface
- 30: recess
- 41: connecting bolt
- 41A: head portion
- 41B: threaded portion
- 42: washer
- 45: distance piece
- 50: shaft fixing bolt

## Claims

1. A shaft coupling comprising:
a pair of hubs made of metal, each having a shaft hole into which a shaft can be fitted; and
an element arranged between the pair of hubs at a predetermined distance from each of the hubs,
wherein the element comprises:
a plurality of metal insert members, each of which has a pair of end surfaces facing the corresponding hubs and fixed to the hubs by fasteners, and a circumferential surface that connects to peripheral edges of the pair of end surfaces; and
an elastic member that is made of an elastomer material and provided to form a single component with the plurality of metal insert members such that the elastic member covers at least a part of the circumferential surface of each of the insert members, and
wherein the plurality of insert members include one or more first insert members fixed only to one of the pair of hubs, and one or more second insert members fixed only to the other.

2. The shaft coupling as claimed in claim 1, wherein the element forms a circular ring, and wherein the plurality of insert members are arranged at equal intervals in a circumferential direction of the element.

3. The shaft coupling as claimed in claim 2, wherein each of the insert members is provided to have a fan shape as viewed in an axial direction.

4. The shaft coupling as claimed in claim 3, wherein the elastic member is provided to cover an entirety of the circumferential surface of each of the insert members.

5. The shaft coupling as claimed in any one of claims 1 to 4, wherein the pair of hubs and the element have a same outer diameter as viewed in an axial direction.

6. The shaft coupling as claimed in any one of claims 1 to 4, wherein each of the hubs has a split groove radially extending from the outer surface, and wherein the split groove forms a gap having a changeable width that allows the shaft to be releasably fixed.

7. A method for producing the shaft coupling as claimed in claim 1, comprising:
a molding step of insert molding the element such that the elastic member can form a single component with the plurality of insert members, and
an assembly step of fixing the insert molded element to the pair of hubs by the fasteners.

8. The method as claimed in claim 7, wherein each of the insert members axially tapers from one of the pair of end surfaces toward the other.
